# EUROPEAN PATENT SPECIFICATION

(11) **EP 4 498 514 B1**
(45) Date of publication and mention of the grant of the patent: **12.08.2026**
(21) Application number: 24164998.7
(22) Date of filing: 21.03.2024
(51) Int. Cl.: H01Q 1/24, H01Q 1/52, H01Q 5/35, H01Q 5/378, H01Q 9/04, H01Q 21/28, H01Q 9/42

(54) **ELECTRONIC APPARATUS**
ELEKTRONISCHES GERÄT
APPAREIL ÉLECTRONIQUE

(30) Priority: 24.07.2023 CN 202310912833
(43) Date of publication of application: 29.01.2025
(73) Proprietor: Beijing Xiaomi Mobile Software Co., Ltd., Beijing 100085 (CN)
(72) Inventor: LIANG, Peiyu, Beijing, 10085 (CN); WANG, CHING-SUNG, Beijing (CN)
(74) Representative: Dehns Germany Partnerschaft mbB

(56) References cited:
- CN-A- 113 851 821
- US-A1- 2015 138 033
- US-A1- 2018 034 148

## Description

### FIELD

The present invention relates to the field of antennas, and more particularly to an electronic apparatus.

### BACKGROUND

In recent years, satellite communication function of electronic apparatuses becomes more and more popular. For example, during communication with a low earth orbit satellite, its frequency band is an L-band (1610 MHz~1626.5 MHz), a common frequency band is used for transmitting and receiving, and a transmitting antenna is a single antenna while a receiving antenna is a dual antenna.

To achieve satellite communication, an existing device adopts an external four-arm spiral antenna, with an antenna pattern facing a direction indicated by the antenna, and a circular polarization axis ratio is good, which can achieve higher circular polarization gain and meet needs of satellite communication. However, the external antenna in the related art increases a size of the electronic apparatus and degrades user experience.

CN113851821A provides a terminal antenna and mobile terminal equipment. The terminal antenna comprises a frame, a first feed source and a second feed source. The frame is provided with a first gap and a second gap which separate the frame to form a first conductor, a second conductor and a third conductor. A part of frame of one side of the first gap away from the second gap forms the first conductor, a part of frame of one side of the second gap away from the first gap forms the second conductor, and a frame between the first gap and the second gap forms the third conductor. The first feed source is electrically connected to the first conductor to enable the first conductor to radiate signals, the second feed source is electrically connected to the second conductor to enable the second conductor to radiate signals of a low-frequency band, one end of the control circuit is grounded, and the other end of the control circuit is electrically connected to the first conductor, and is used for controlling the first conductor to radiate a signal of a medium-high frequency band or radiate a signal of a low frequency band. The terminal antenna can work at low frequency bands of 4G and 5G, and has good mobile communication performance.

US20180034148A1 provides an electronic device. The electronic device includes a first antenna configured to transmit and receive signals of a plurality of frequency bands, and a second antenna disposed at an area adjacent to the first antenna. The first antenna includes a first wireless communication circuit, a first radiator, a first feeding part configured to connect the first wireless communication circuit to the first radiator, a first ground part configured to be connected to one end of the first radiator, a switching circuit configured to be connected to the first radiator in an area adjacent to the second antenna, at least one frequency band element in which a first end is connected to the switching circuit and a second end is connected to the first ground part, and at least one isolation element configured to connect the first radiator to the ground part in the area adjacent to the second antenna.

US20150138033A1 provides an antenna structure including a first radiation arm, a second radiation arm, a feed end, and a ground end. The second radiation arm is perpendicularly connected to the first radiation arm. The first radiation arm and the second radiation arm jointly form a junction, both the feed end and the ground end are positioned adjacent to the junction.

### SUMMARY

The present invention provides an electronic apparatus to solve the shortcomings in the related art.

A first aspect of embodiments of the present invention provides an electronic apparatus, including a first antenna, a second antenna and an isolation device. Each of the first antenna and the second antenna includes a satellite L-band. The isolation device is arranged between the first antenna and the second antenna. The isolation device is in a first state during a transmission phase of satellite communication and is in a second state during a reception phase of satellite communication or during non-satellite communication.

Optionally, the isolation device includes a preset frame arranged between the first antenna and the second antenna, and a partition strip is arranged between the preset frame and the first antenna and between the preset frame and the second antenna.

Optionally, the isolation device further includes a tuning circuit. At least one input terminal of the tuning circuit is electrically coupled to at least one tuning point of the preset frame, correspondingly, and an output terminal of the tuning circuit is grounded. The tuning circuit is configured not to ground the preset frame during the transmission phase of satellite communication. The tuning circuit is configured to ground the preset frame during the reception phase of satellite communication or during non-satellite communication.

Optionally, the tuning circuit has two input terminals, and the tuning circuit includes an antenna switch, a first matching network and a second matching network. A first end of the first matching network is electrically coupled to a first tuning point of the preset frame, and a second end of the first matching network is electrically coupled to a first end of the antenna switch. A first end of the second matching network is electrically coupled to a second tuning point of the preset frame, and a second end of the second matching network is electrically coupled to a second end of the antenna switch. A third end of the antenna switch is grounded. A control end of the antenna switch is electrically coupled to a processor of the electronic apparatus.

Optionally, the tuning circuit has two input terminals, and the tuning circuit includes an antenna switch, a first matching network and a third matching network. A first end of the first matching network is electrically coupled to a first tuning point of the preset frame, and a second end of the first matching network is electrically coupled to a first end of the antenna switch. A first end of the third matching network is electrically coupled to a first feeding point of the preset frame, and a second end of the third matching network is electrically coupled to a second end of the antenna switch. A third end of the antenna switch is grounded. A control end of the antenna switch is electrically coupled to a processor of the electronic apparatus. The preset frame, the first matching network and the third matching network constitute an IFA antenna.

Optionally, the third matching network includes at least one of a zero-ohm resistor, an LC circuit or a capacitor.

Optionally, the first matching network includes at least one of a zero-ohm resistor, an LC circuit or a capacitor; and the second matching network includes at least one of a zero-ohm resistor, an LC circuit or a capacitor.

Optionally, the first antenna is arranged at a first vertex of the electronic apparatus, and the second antenna is arranged at a second vertex of the electronic apparatus.

Optionally, the first vertex is at a first top corner of the electronic apparatus, the second vertex is at a second top corner of the electronic apparatus, and the first top corner and the second top corner are symmetrical about a vertical central axis of the electronic apparatus.

Optionally, a circular polarization gain pattern of the first antenna points towards a first direction and contains a component biased towards a direction opposite to a second direction; and a circular polarization gain pattern of the second antenna points towards the first direction and contains a component biased towards the second direction.

Optionally, the first antenna includes a first top frame, a first side frame, a first feeding point and a first ground point; the first top frame extends along a second direction, the first side frame extends along a third direction, and the first top frame is electrically coupled to the first side frame; the third direction is parallel to a vertical central axis of the electronic apparatus and is perpendicular to a first direction and the second direction; and the first top frame is electrically coupled to a main board of the electronic apparatus through the first feeding point, and the first side frame is grounded through the first ground point.

Optionally, the first antenna further includes a third feeding point, and the first top frame is electrically coupled to the main board of the electronic apparatus through the third feeding point.

Optionally, the second antenna includes a second top frame, a second side frame, a second feeding point and a second ground point; the second top frame extends along a second direction, the second side frame extends along a third direction, and the second top frame is electrically coupled to the second side frame; the third direction is parallel to a vertical central axis of the electronic apparatus and is perpendicular to a first direction and the second direction; and the second top frame is electrically coupled to a main board of the electronic apparatus through the second feeding point, and the second side frame is grounded through the second ground point.

Optionally, the second antenna further includes a fourth feeding point, and the second top frame is electrically coupled to the main board of the electronic apparatus through the fourth feeding point.

Optionally, a horizontal central axis of the electronic apparatus is parallel to a second direction, and the second direction is perpendicular to a first direction.

The technical solutions according to the embodiments of the present invention have the following beneficial effects.

The electronic apparatus according to the embodiments of the present invention includes the first antenna, the second antenna and the isolation device. Each of the first antenna and the second antenna includes the satellite L-band; the isolation device is arranged between the first antenna and the second antenna; and the isolation device is in the first state during the transmission phase of satellite communication and is in the second state during the reception phase of satellite communication or during non-satellite communication. As a result, in the embodiments of the present invention, by arranging the isolation device, a degree of isolation between the first antenna and the second antenna can be increased during working, ensuring the quality of satellite communication and improving user experience.

It should be understood that both the forgoing general descriptions and the following detailed descriptions are exemplary and explanatory only, and are not restrictive of the present invention.

### BRIEF DESCRIPTION OF DRAWINGS

The accompanying drawings, which are incorporated in and constitute a part of the description, illustrate embodiments consistent with the present invention and together with the description, serve to explain the principles of the present invention.
FIG. 1 shows a block diagram of an electronic apparatus according to an embodiment of the present invention.
FIG. 2 shows a block diagram of an electronic apparatus according to an embodiment of the present invention.
FIG. 3 shows a circuit diagram of a tuning circuit according to an embodiment of the present invention.
FIG. 4 shows a block diagram of an electronic apparatus according to an embodiment of the present invention.
FIG. 5 shows a schematic diagram of an S parameter of an antenna according to an embodiment of the present invention.
FIG. 6 shows a block diagram of an electronic apparatus according to an embodiment of the present invention.
FIG. 7 shows a schematic diagram of gain curves of a first antenna and a second antenna in a first working state according to an embodiment of the present invention.
FIG. 8 shows a schematic diagram of gain curves of a first antenna and a second antenna in a first working state according to an embodiment of the present invention.
FIG. 9 shows a schematic diagram of a circular polarization gain pattern of a first antenna according to an embodiment of the present invention.
FIG. 10 shows a schematic diagram of gain curves of a first antenna and a second antenna in a second working state according to an embodiment of the present invention.
FIG. 11 shows a schematic diagram of gain curves of a first antenna and a second antenna in a second working state according to an embodiment of the present invention.
FIG. 12A and FIG. 12B show schematic diagrams of a circular polarization gain pattern of a first antenna and a second antenna, respectively, according to an embodiment of the present invention.
FIG. 13 shows a schematic diagram of an antenna total efficiency in a first working state and a second working state scenarios according to an embodiment of the present invention.
FIG. 14 shows a block diagram of an electronic apparatus according to an embodiment of the present invention.

### DETAILED DESCRIPTION

Exemplary embodiments are described in detail here, and examples are shown in the accompanying drawings. When the following description refers to the accompanying drawings, unless specified or limited otherwise, the same number in different accompanying drawings indicates the same or similar elements. The exemplary embodiments described below are not representative of all embodiments consistent with the present invention. Rather, they are only examples of devices that are consistent with some aspects of the present invention as detailed in the attached claims. It should be noted that the embodiments described below and the features in the embodiments can be combined with each other without conflict.

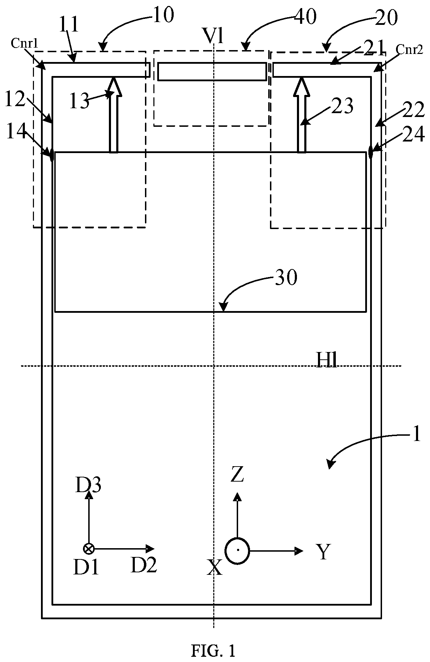

Embodiments of the present invention provide an electronic apparatus, with reference to FIG. 1, including a first antenna 10 arranged at a first vertex and a second antenna 20 arranged at the second vertex. The first vertex and the second vertex can be selected from four or more vertexes of the electronic apparatus according to specific scenarios. In an example, the first vertex is at a first top corner Cnr1 of the electronic apparatus, the second vertex is at a second top corner Cnr2 of the electronic apparatus, and the first top corner Cnr1 and the second top corner Cnr2 are symmetrical about a vertical central axis V1 of the electronic apparatus 1; and an working frequency band of the first antenna 10 and a working frequency band of the second antenna 20 both include a satellite L-band (1610 MHz~1626.5 MHz).

A circular polarization gain pattern of the first antenna 10 points towards a first direction D1 and contains a component biased towards an opposite direction of a second direction D2; a circular polarization gain pattern of the second antenna 20 points towards the first direction D1 and contains a component biased towards the second direction D2; and the second direction D2 is parallel to a horizontal central axis H1 of the electronic apparatus, and the second direction D2 is perpendicular to the first direction D1.

In an embodiment, considering that the electronic apparatus is typically equipped with a display screen and a back housing, a side provided with the display screen is referred to as a front side, and a side provided with the back housing is referred to as a back side.

When the display screen of the electronic apparatus is placed vertically, an effect of the display screen viewed from the back housing of the electronic apparatus is shown in FIG. 1, at this time, a top left corner of the electronic apparatus is the first top corner, a top right corner of the electronic apparatus is the second top corner, and the first top corner and the second top corner are symmetrical about the vertical central axis V1 of the electronic apparatus 1.

Based on the back side where the back housing of the electronic apparatus is located, a three-dimensional coordinate system xyz for the electronic apparatus is established based on a righthand rule. A second coordinate axis Y is parallel to the horizontal central axis H1 of the electronic apparatus, a third coordinate axis Z is parallel to the vertical central axis V1 of the electronic apparatus, and a first coordinate axis X is perpendicular to a plane YOZ, or rather perpendicular to a plane where the back housing of the electronic apparatus is located. At this time, the first direction D1 is parallel to the first coordinate axis X but directions thereof are opposite, and the first direction shown in FIG. 1 is a direction extending forwards along a direction of the line of sight; and the second direction D2 is parallel to the second coordinate axis Y and directions thereof are the same, and the second direction shown in FIG. 1 is a direction extending from left to right. In addition, a subsequent third direction D3 is parallel to the third coordinate axis Z.

Referring to FIG. 1, the first antenna 10 includes a first top frame 11, a first side frame 12, a first feeding point 13 and a first ground point 14. The first top frame 11 extends along the second direction D2, the first side frame 12 extends along the third direction, and the first top frame 11 is electrically coupled to the first side frame 12. The third direction is parallel to the vertical central axis of the electronic apparatus, and is perpendicular to the first direction D1 and the second direction D2. The first top frame 11 is electrically coupled to the main board 30 of the electronic apparatus through the first feeding point 13, and the first side frame 12 is grounded to GND through the first ground point 14 (not shown in figures). A middle frame or a metal back housing of the electronic apparatus can be configured as a common GND of the electronic apparatus to be used, at this time, the first ground point 14 can be electrically coupled to the above mentioned common GND. In this way, the first antenna 10 is configured as an inverted-F antenna (IFA) to be used.

In an embodiment, in addition to the above mentioned satellite L-band (1610 MHz~1626.5 MHz), the working frequency band of the first antenna 10 may also include at least one of the following frequency bands: GPS L1 frequency band (1575 MHz), WIFI 2.4G frequency band (2400 MHz~2500 MHz), WIFI 5G frequency band (5725 MHz-5850 MHz), WIFI 6E frequency band (5.925 GHz-7.125 GHz) and LTE B32 frequency band (450 MHz-3.8 GHz). Technicians can select an appropriate range of the working frequency band according to specific scenarios, so that the first antenna 10 can be applied to different communication scenarios, and the corresponding solution falls within the protection scope of the present invention.

Referring to FIG. 1, the second antenna 20 includes a second top frame 21, a second side frame 22, a second feeding point 23 and a second ground point 24. The second top frame 21 extends along the second direction D2, the second side frame 22 extends along the third direction, and the second top frame 21 is electrically coupled to the second side frame 22. The third direction is parallel to the vertical central axis V1 of the electronic apparatus, and is perpendicular to the first direction D1 and the second direction D2. The second top frame 21 is electrically coupled to the main board 30 of the electronic apparatus through the second feeding point 23, and the second side frame 22 is grounded to GND through the second ground point 24. A middle frame or a metal back housing of the electronic apparatus can be configured as a common GND of the electronic apparatus to be used, at this time, the second ground point 24 can be electrically coupled to the above mentioned common GND. In this way, the second antenna 20 is configured as an inverted-F antenna (IFA) to be used.

In an embodiment, in addition to the above mentioned satellite L-band (1610 MHz~1626.5 MHz), the working frequency band of the second antenna 20 may also include at least one of the following frequency bands: Cellular high frequency band (1710 MHz-2700 MHz), LTE B3 (1710 MHz-1880 MHz)/B1 (1920 MHz-2170 MHz)/B40 (2300 MHz-2400 MHz)/B41 (2496 MHz-2690 MHz)/B39 (1880 MHz-1920 MHz)/B38 (2570 MHz-2620 MHz)/B34 (2010 MHz -2025 MHz) and NR N1 (1920 MHz-2170 MHz)/N3 (1710 MHz-1880 MHz)/N7 (2500 MHz-2690 MHz)/N41 (2496 MHz-2690 MHz) frequency bands. Technicians can select an appropriate range of the working frequency band according to specific scenarios, so that the second antenna 20 can be applied to different communication scenarios, and the corresponding solution falls within the protection scope of the present invention.

In an embodiment, the first antenna 10 or the second antenna 20 serves as a transmitting antenna, and the first antenna 10 and the second antenna 20 together serve as a receiving antenna, to meet a requirement of one-transmission-and-two-reception of satellite communication. It is understood that, in some examples, the first antenna 10 is configured as the transmitting antenna and the second antenna 20 is configured as the receiving antenna, which can also meet the needs of satellite communication, and the corresponding solution falls within the protection scope of the present invention. In other examples, the second antenna 20 can be configured as the transmitting antenna and the first antenna 10 is configured as the receiving antenna, which can also meet the needs of satellite communication, and the corresponding solution falls within the protection scope of the present invention.

It should be noted that, in the embodiment, the first antenna 10 is configured as the transmitting antenna because a frequency range of the satellite L-band is close to the GPS L1 frequency band (1575 MHz); and If there is a GPS positioning requirement during satellite communication, it is can be ensured that the first antenna 10 has a good gain for both the GPS L1 frequency band and the satellite L-band. In other words, in the embodiment, the first antenna 10 is configured as the transmitting antenna, which can be better compatible with GPS positioning and satellite communication requirements, improving communication efficiency.

It should be noted that, in the embodiment, the first antenna 10 and the second antenna 20 are configured as the receiving antenna, which can consider a complementary characteristic of the circular polarization gain patterns of both antennas, and can expand a beam width of the antenna of the electronic apparatus, so as to achieve the purpose of improving communication efficiency.

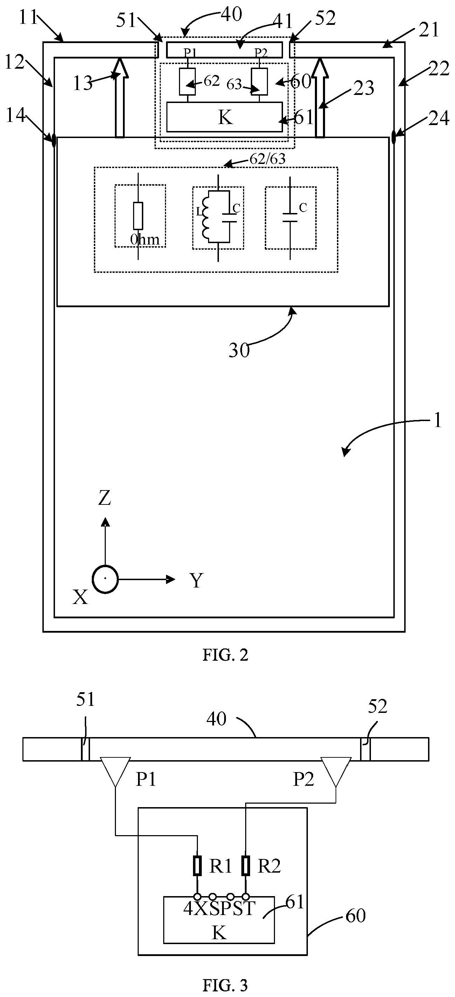

Referring to FIG. 2, the electronic apparatus further includes an isolation device 40 arranged between the first antenna 10 and the second antenna 20, the isolation device 40 is in a first state during a transmission phase of satellite communication, and is in a second state during non-satellite communication or during a reception phase of satellite communication, which can improve a degree of isolation between the first antenna 10 and the second antenna 20, thereby improving the quality of satellite communication and upgrading the user experience.

In an example, the isolation device 40 includes a preset frame 41 arranged between the first antenna 10 and the second antenna 20. The preset frame 41 and the first top frame 11 and the second top frame 21 are all made of a metal material. A partition strip is arranged between the preset frame 41 and the first antenna 10 and between the preset frame 41 and the second antenna 20. Referring to FIG. 2, a first partition strip 51 is arranged between the first top frame 11 of the first antenna 10 and the preset frame 41; and a second partition strip 52 is arranged between the second top frame 21 of the second antenna 20 and the preset frame 41. The first partition strip 51 and the second partition strip 52 mentioned above can be made of a non-metallic material such as plastic to achieve electrical isolation between adjacent two top frames.

In this way, in the embodiment, by arranging the preset frame 41, can increase the distance between the first antenna 10 and the second antenna 20, reduces interference between the first antenna 10 and the second antenna 20, and is conducive to improve the degree of isolation between the first antenna 10 and the second antenna 20.

Referring to FIG. 2, in an embodiment, the isolation device 40 further includes a tuning circuit 60. At least one input terminal of the tuning circuit 60 is electrically coupled to at least one tuning point of the preset frame 41, correspondingly. An output terminal of the tuning circuit 60 is grounded to GND (not shown in figures). The tuning circuit 60 is configured to suspend the preset frame (i.e., not grounded) during the transmission phase of satellite communication; and the tuning circuit 60 is configured to ground the preset frame during the reception phase of satellite communication or during non-satellite communication. In this way, in the embodiment, the preset frame 41 is suspended by the tuning circuit 60, which can ensure that the first antenna 10 works in a high gain state under the condition that the second antenna 20 does not work, achieving the effect of improving the transmission gain. Moreover, in the embodiment, the preset frame 41 is grounded through the tuning circuit 60, so that a radio frequency signal transmitted and received by the first antenna 10 cannot be propagated to the second antenna 20 through the preset frame 41, or so that a radio frequency signal transmitted and received by the second antenna 20 cannot be propagated to the first antenna 10 through the preset frame 41, which can increase the degree of isolation between the first antenna 10 and the second antenna 20, ensures that both antennas are in the high gain state, and achieves the effect of improving the reception gain.

In an embodiment, the tuning circuit 60 has two input terminals. Referring to FIG. 2, the tuning circuit 60 includes an antenna switch (K) 61, a first matching network 62 and a second matching network 63. A first end of the first matching network 62 is electrically coupled to a first tuning point P1 of the preset frame 41, and a second end of the first matching network 62 is electrically coupled to a first end of the antenna switch 61; a first end of the second matching network 63 is electrically coupled to a second tuning point P2 of the preset frame 41, and a second end of the second matching network 63 is electrically coupled to a second end of the antenna switch 61; a third end of the antenna switch 61 is grounded to GND (not shown in figures); and a control end of the antenna switch (not shown in figures) is electrically coupled to a processor of the electronic apparatus (not shown in figures). In this way, when the antenna switch 61 is turned on, the first matching network 62 and/or the second matching network 63 can be grounded, so as to achieve an effect of increasing the degree of isolation between the first antenna 10 and the second antenna 20.

In an example, the first matching network includes at least one of a zero-ohm resistor, an LC circuit or a capacitor; and/or, the second matching network includes at least one of a zero-ohm resistor, an LC circuit or a capacitor. Referring to FIG. 2, FIG. 2 illustrates a scheme of a zero-ohm resistance 0hm, the LC circuit and the capacitor. In an example, the first matching network 62 and the second matching network 63 are implemented with the zero-ohm resistor. Referring to FIG. 3, the first matching network 62 is implemented with a zero-ohm resistance R1, the second matching network 63 is implemented with a zero-ohm resistance R2, and the antenna switch 61 is implemented with a 4XSPST antenna switch.

In another example, the first matching network 62 and the second matching network 63 are implemented with the capacitor which can have a capacitance value of 33 pF. At this time, the preset frame 41 and the tuning circuit 60 can connect the capacitor to ground, so that the preset frame 41 is grounded, to meet the needs of satellite communication. And the above mentioned preset frame 41 and tuning circuit 60 can be configured to form a SAR sensor, and when the capacitor is grounded, it is equivalent to an open circuit for the SAR sensor, thereby meeting the needs of the SAR sensor and the antenna. In this way, a function of the preset frame 41 can be extended by adjusting a type of the first matching net 62 and the second matching net 63 in the embodiment.

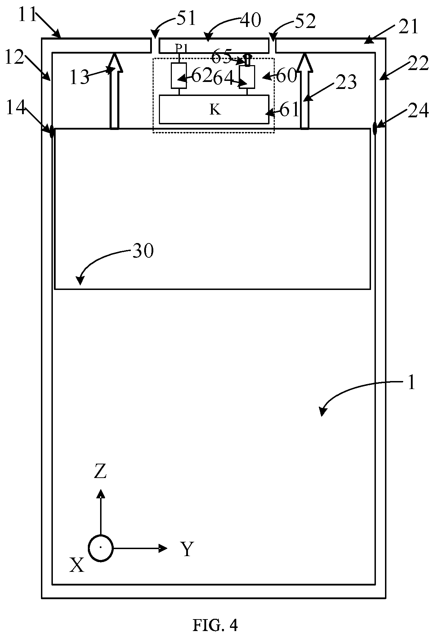

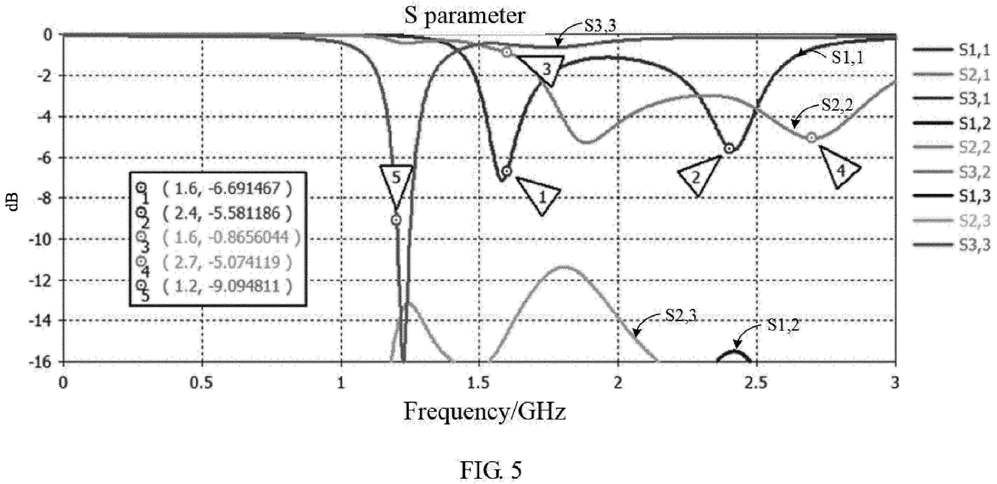

In another embodiment, the tuning circuit 60 has two input terminals. Referring to FIG. 4, The tuning circuit 60 includes the antenna switch 61, the first matching network 62 and a third matching network 64; the first end of the first matching network 62 is electrically coupled to the first tuning point P1 of the preset frame 41, and the second end of the first matching network 62 is electrically coupled to the first end of the antenna switch 61; a first end of the third matching network 64 is electrically coupled to the first feeding point 13 of the preset frame 41, and a second end of the third matching network 64 is electrically coupled to the second end of the antenna switch 61; the third end of the antenna switch 61 is grounded to GND; the control end of the antenna switch 61 (not shown in figures) is electrically coupled to the processor of the electronic apparatus (not shown in figures); and the preset frame 41, the first matching network 62 and the third matching network 64 constitute an IFA antenna, also called a third antenna. The third matching network 64 includes at least one of the zero-ohm resistor, the LC circuit or the capacitor, which may specifically refer to a circuit of the first matching network shown in FIG. 2. A working frequency band of the third antenna is a GPS L5 frequency band (1175.427 MHz-1177.473 MHz). The preset frame 41 can be grounded by the antenna switch 61 during satellite communication and when the first antenna and the second antenna both transmit signals, the preset frame is suspended when the first antenna transmits signals during satellite communication, and an S parameter of the first antenna, the second antenna and the third antenna are shown in FIG. 5. Referring to FIG. 5, Sn, m indicates the S parameter of an n^{th} antenna in a working state m, with n values of 1, 2 and 3, and with m values of 1, 2 and 3. The S parameter can reach -6.691467 dB when the first antenna is in an first working state and works at 1.6 GHz, the S parameter can reach -5.581186 dB when the first antenna is in the first working state and works at 2.4 GHz, the S parameter can reach -0.8656044 dB when the second antenna is in an second working state and works at 1.6 GHz, the S parameter can reach -5.074119 dB when the second antenna is in the second working state and works at 2.7 GHz, and the S parameter can reach -9.094811 dB when the third antenna is in a working state 3 and works at 1.2 GHz. In this way, the utilization rate of the preset frame can be improved in the embodiment.

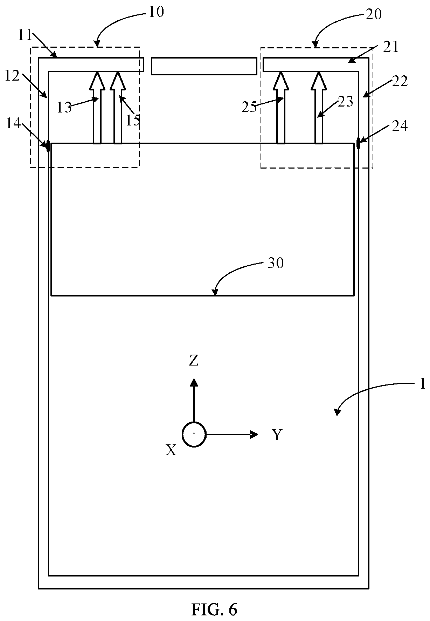

In an embodiment, the working frequency band of the first antenna 10 can also include the WIFI 5G frequency band or the WIFI 6E frequency band, and referring to FIG. 6, the first antenna 10 further includes a third feeding point 15. The first top frame 11 is electrically coupled to the main board 30 of the electronic apparatus through the third feeding point 15. In this way, a radio frequency module inside the main board 30 (not shown in figures) can switch the first feeding point 13 or the third feeding point 15 to adjust the working frequency band of the first antenna 10, which achieves an effect of expanding the working frequency band of the first antenna, and is conducive to reduce the volume and cost of the electronic apparatus.

In an embodiment, when the working frequency band of the second antenna 20 can further include a sub 6G frequency band, the second antenna 20 further includes a fourth feeding point 25. The second top frame 21 is electrically coupled to the main board 30 of the electronic apparatus through the fourth feeding point 25. In this way, a radio frequency module inside the main board 30 (not shown in figures) can switch the second feeding point 23 or the fourth feeding point 25 to adjust the working frequency band of the second antenna 20, which achieves an effect of expanding the working frequency band of the second antenna, and is conducive to reduce the volume and cost of the electronic apparatus.

In the embodiment, the working state of the first antenna 10 and the second antenna 20 of the electronic apparatus includes:

### (1) First working state

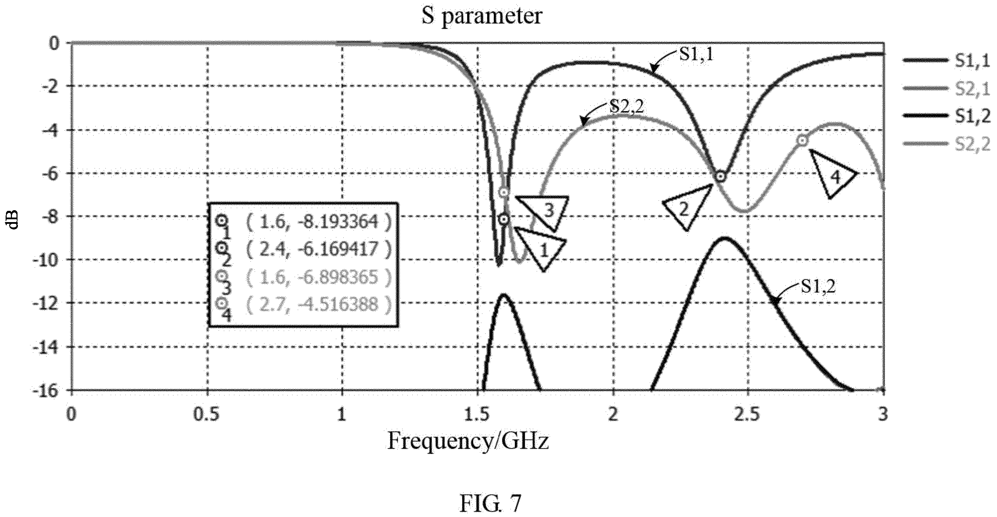

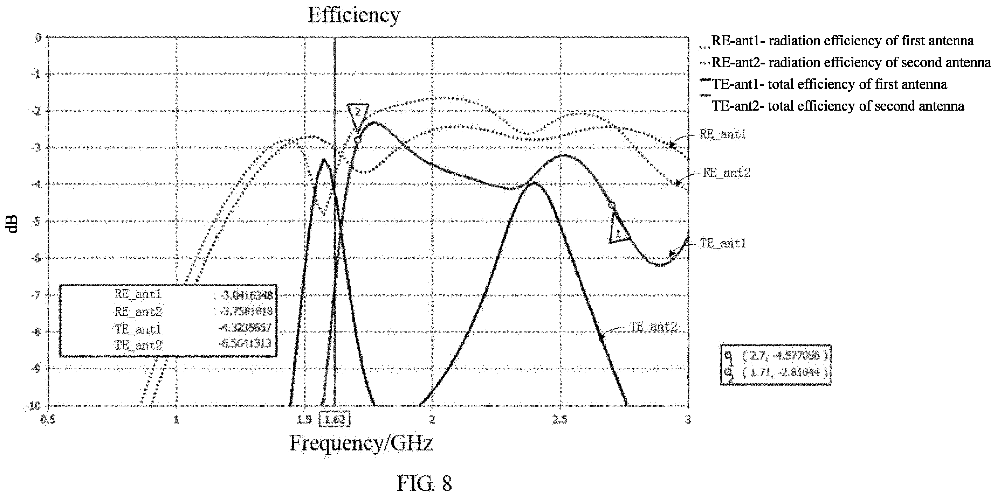

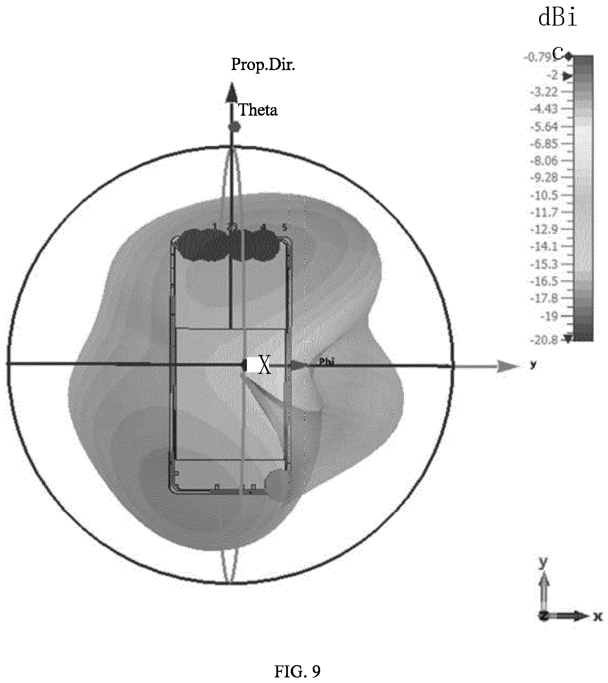

The electronic apparatus is in the transmission phase during satellite communication, the switch 61 is in an off state at this time, the first matching network and the second matching network are not grounded at this time, and the preset frame of the isolation device is suspended at this time. The first antenna 10 is in the transmission state, the second antenna 20 is in a non-working state, the degree of isolation between the first antenna 10 and the second antenna 20 is shown in FIG. 7, the efficiency of the first antenna 10 and the second antenna 20 is shown in FIG. 8, and the circular polarization gain pattern of the first antenna 10 is shown in FIG. 9. Referring to FIG. 7, when the working frequency of the first antenna 10 and the second antenna 20 is at 1.6 GHz, the S parameter are -8.193364 dB and -6.898365 dB, respectively, and a worst position of the degree of isolation between the first antenna 10 and the second antenna 20 is below -12 dB, but the performance of the first antenna 10 is the best and the second antenna 20 does not work, so that it can be guaranteed that the first antenna 10 works reliably. Referring to FIG. 8, the first antenna 10 has a total efficiency of -4.577056 dB when working at 2.7 GHz, and the total efficiency is -2.81044 dB when at 1.71 GHz; and when the first antenna 10 and the second antenna 20 are at 1.62 GHz, their radiation efficiency and total efficiency are approximately -3.0416348 dB, -3.7581818 dB, -4.3235657 dB and -6.5641313 dB, respectively. Referring to FIG. 9, the circular polarization gain pattern of the first antenna 10 mainly points towards a top direction of the electronic apparatus and contains a component pointing to a back direction, and a summit of the circular polarization gain reaches - 2.1dBic, which can provide better user experience during a process of searching for a satellite or matching the satellite, and has a good beam width.

### (2) Second working state

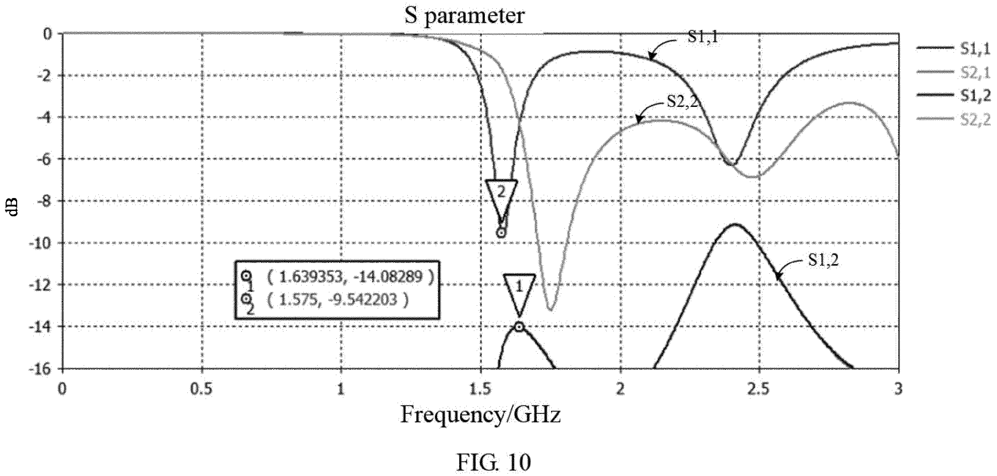

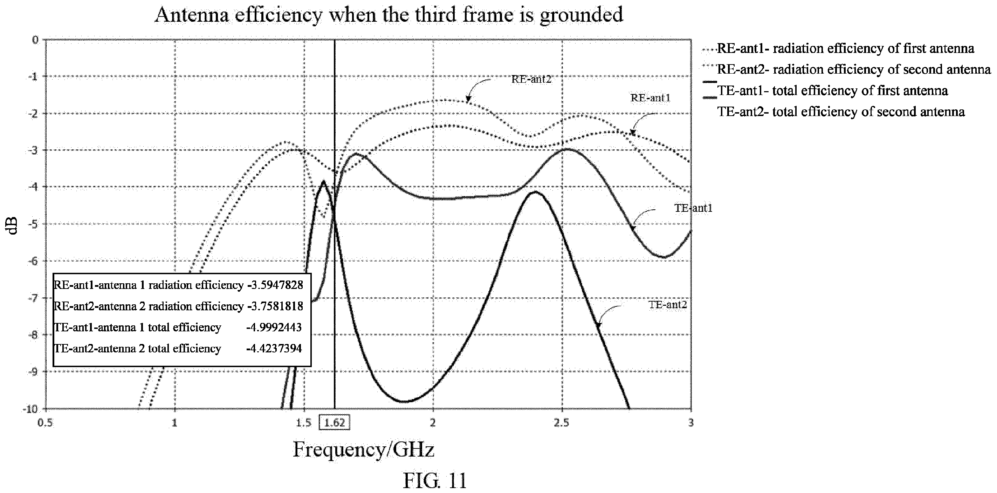

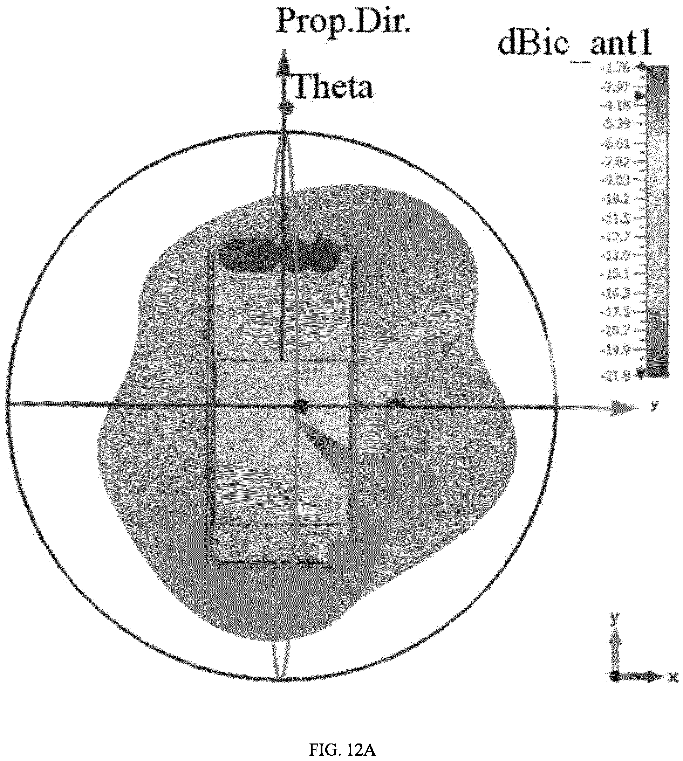

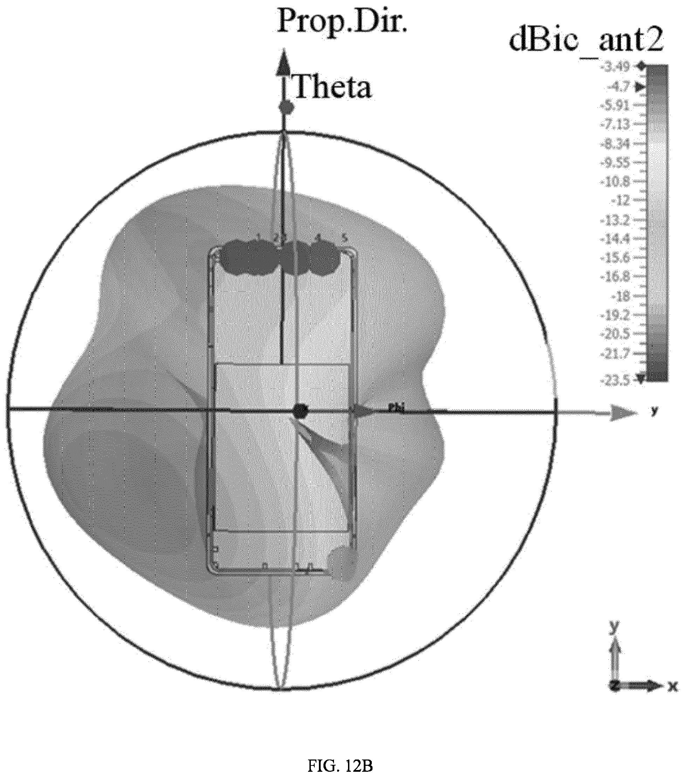

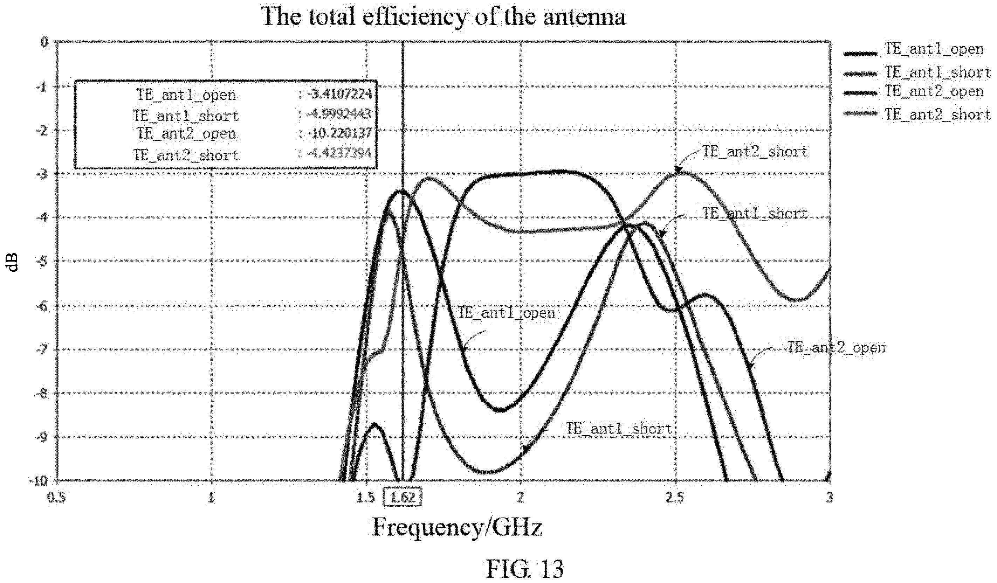

The electronic apparatus is in the reception phase during satellite communication, the switch 61 is in an on (short) state at this time, the first matching network and the second matching network are grounded at this time, and the preset frame 41 of the isolation device is grounded at this time. The first antenna 10 and the second antenna 20 are both in a reception state. At this time, the degree of isolation between the first antenna 10 and the second antenna 20 is shown in FIG. 10, the efficiency of the first antenna 10 and the second antenna 20 is shown in FIG. 11, and the circular polarization gain patterns of the first antenna 10 and the second antenna 20 are shown in FIG. 12A and FIG. 12B. Referring to FIG. 10 and FIG. 11, the working frequency of the first antenna 10 is about 1.62GHz, the working frequency of the second antenna 20 deviates from 1.62 GHz, the degree of isolation between the first antenna 10 and the second antenna 20 can be controlled below -14 dB at this time, the performance of the first antenna 10 and the second antenna 20 is balanced at this time, and the GPS performance of the first antenna 10 is also higher. Referring to FIG. 13, the first antenna 10 and the second antenna 20 work together, the first antenna 10 and the second antenna 20 both have components in the back direction of the electronic apparatus, the first antenna 10 is biased to right and the second antenna 20 is biased to left, and patterns thereof complement each other, at this time, the circular polarization gain of the first antenna 10 and the second antenna 20 reach -3.6 dBic and -4.8 dBic, respectively. Referring to FIG. 13, the efficiency of the first working state and the second working state is 1.5 dBm higher.

It should be noted that analysis of FIG. 10, FIG. 11 and FIGS. 12A and 12B can be referred to analysis content of FIG. 7, FIG. 8 and FIG. 9, and will not be repeated here.

### (3) Third working state

The electronic apparatus is in a non-satellite communication state, the switch 61 is in the on (short) state at this time, the first matching network and the second matching network are grounded at this time, and the preset frame 41 is grounded at this time. The first antenna 10 and the second antenna 20 are both in a reception state, at this time, the effect is as shown in the second working state, referring to the content of second working state for details, which will not be repeated here.

In the embodiment, a metal frame is made into the first antenna, the second antenna and the isolation device, which achieves a function of one transmitting antenna and two receiving antennas, and achieves a purpose of carrying out satellite communication function with a low earth orbit satellite; and it can be compatible with the working frequency band such as GPS/WIFI, Cellular, etc. Moreover, in the embodiment, the degree of isolation between the first antenna and the second antenna also can be tuned through the preset frame of the isolation device in the middle, achieving an effect that the performance of the satellite frequency band is optimal during the transmission phase and the performance of two antennas is balanced during the reception phase. In addition, in the embodiment, the first antenna and the second antenna are arranged at two corners of a top, facing each other, and (back view) the gain patterns complement left and right, which can expand the beam width when receiving, improves a success rate of the user searching for the satellite in low orbit, does not need to rotate greatly according to the movement of the low earth orbit satellite, and the user experience is optimal when the user holds a phone for searching for the satellite.

It should be noted that the device embodiments in the present invention correspond to the content of the above method embodiments, which can refer to the content of the above method embodiments, and will not be repeated here.

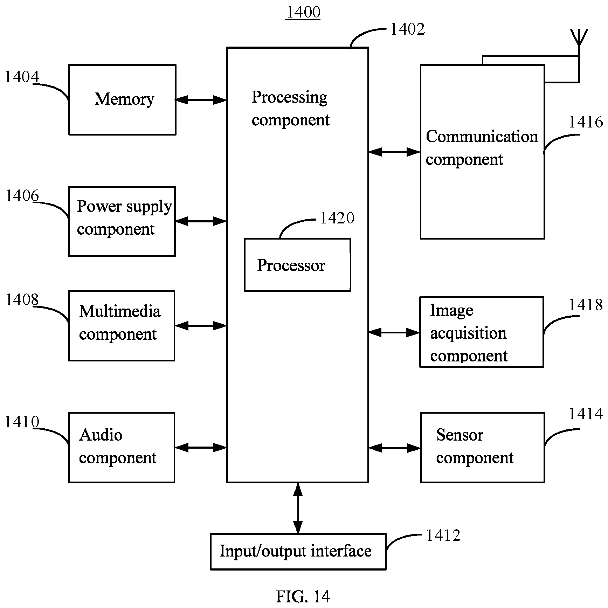

FIG. 14 shows a block diagram of an electronic apparatus according to an embodiment of the present invention. For example, the electronic apparatus 1400 may be a smartphone, a computer, a digital broadcast terminal, a tablet device, a medical device, a fitness device, and a personal digital assistant, etc.

Referring to FIG. 14, the electronic apparatus 1400 may include one or more of the following components: a processing component 1402, a memory 1404, a power supply component 1406, a multimedia component 1408, an audio component 1410, an input/output (I/O) interface 1412, a sensor component 1414, a communication component 1416, and an image acquisition component 1418.

The processing component 1402 typically controls the overall operation of the electronic apparatus 1400, such as the operation associated with display, telephone call, data communication, camera operation and recording operation. The processing component 1402 may include one or more processors 1420 to execute computer programs. In addition, the processing component 1402 may include one or more modules, to facilitate the interaction between the processing component 1402 and other components. For example, the processing component 1402 may include a multimedia module, to facilitate the interaction between the multimedia component 1408 and the processing component 1402.

The memory 1404 is configured to store various types of data to support the operation of the electronic apparatus 1400. Examples of these data include computer programs of any applications or methods operated on the electronic apparatus 1400, contact data, phonebook data, messages, pictures, videos, etc. The memory 1404 can be implemented with any types of volatile or non-volatile memory device, or a combination thereof, such as static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a disk, or an optical disk.

The power supply component 1406 provides power to various components of the electronic apparatus 1400. The power supply component 1406 may include a power management system, one or more power supplies, and other components associated with generating, managing, and distributing power for the electronic apparatus 1400. The power supply component 1406 may include a power chip, and the controller can communicate with the power chip, thereby controlling the power chip to turn on or turn off the first switching device, so that the battery can supply power to the motherboard circuit or not.

The multimedia component 1408 includes a screen providing an output interface between the electronic apparatus 1400 and a target object. In some embodiments, the screen may include a liquid crystal display (LCD) and a touch panel (TP). If the screen includes a touch panel, the screen can be implemented as a touch screen, to receive input information from the target object. The touch panel includes one or more touch sensors to sense touch, sliding, and a gesture on the touch panel. The touch sensor can not only sense the boundary of a touch or sliding swipe action, but also detect the duration and pressure associated with the touch or sliding action.

The audio component 1410 is configured to output and/or input audio file information. For example, the audio component 1410 includes a microphone (MIC), and the microphone is configured to receive external audio file information when the electronic apparatus 1400 is in an operating mode, such as a call mode, a record mode and a voice recognition mode. The received audio file information may be further stored in memory 1404 or be sent via the communication component 1416. In some embodiments, the audio component 1410 further includes a speaker for outputting the audio file information.

The I/O interface 1412 provides an interface between the processing component 1402 and a peripheral interface module, and the peripheral interface module may be a keyboard, a clicking wheel, a button and the like.

The sensor component 1414 includes one or more sensors for providing condition assessment of various aspects for the electronic apparatus 1400. For example, the sensor component 1414 can detect the open/closed state of the electronic apparatus 1400, the relative positioning of the components, for example, the component is a display screen and a keypad of the electronic apparatus 1400, and the sensor component 1414 can also detect changes in the position of the electronic apparatus 1400 or a component, the presence or absence of contact between the target object and the electronic apparatus 1400, the orientation or acceleration/deceleration of the electronic apparatus 1400, and the temperature change of the electronic apparatus 1400. In this example, the sensor component 1414 may include a magnetic sensor, a gyroscope and a magnetic field sensor, and may also include an inertial sensor, an image sensor, etc. The magnetic field sensor includes at least one of a Hall sensor, a thin-film magnetoresistive sensor, or a magnetic liquid accelerometer.

The communication component 1416 is configured to facilitate wired or wireless communication between the electronic apparatus 1400 and other devices. The electronic apparatus 1400 can be coupled to a wireless network which is based on a communication standard, such as Wi-Fi, 2G, 3G, 4G, 5G, or a combination thereof. In an embodiment, the communication component 1416 receives broadcast information or broadcast-related information from an external broadcast management system through a broadcast channel. In an embodiment, the communication component 1416 also includes a near-field communication (NFC) module, to facilitate short-range communication. For example, the NFC module can be implemented based on radio frequency identification (RFID) technology, infrared data association (IrDA) technology, ultra-wideband (UWB) technology, Bluetooth (BT) technology and other technologies. In an example, the communication component 1416 includes the first antenna and the second antenna, and/or the third antenna.

In an embodiment, the electronic apparatus 1400 may be implemented by one or more application-specific integrated circuits (ASIC), digital signal processors (DSP), digital signal processing devices (DSPD), programmable logic devices (PLD), field-programmable gate arrays (FPGA), controllers, microcontrollers, microprocessors, or other electronic components.

Other embodiments of the present invention will be conceivable to those skilled in the art from consideration of the specification and practice of the embodiments disclosed here. The specification and embodiments are merely considered to be exemplary and the scope of the present invention is limited only by the appended claims.

## Claims

1. An electronic apparatus (1), comprising:
a first antenna (10);
a second antenna (20); and
an isolation device (40),
wherein:
each of the first antenna (10) and the second antenna (20) comprises a satellite L-band;
the isolation device (40) is arranged between the first antenna (10) and the second antenna (20);
**characterized in that**
the isolation device (40) is in a first state during a transmission phase of satellite communication and is in a second state during a reception phase of satellite communication or during non-satellite communication.

2. The electronic apparatus (1) according to claim 1, wherein the isolation device (40) comprises a preset frame (41) arranged between the first antenna (10) and the second antenna (20), and a partition strip (51, 52) is arranged between the preset frame (41) and the first antenna (10) and between the preset frame (41) and the second antenna (20).

3. The electronic apparatus (1) according to claim 2, wherein the isolation device (40) further comprises a tuning circuit (60),
at least one input terminal of the tuning circuit (60) is electrically coupled to at least one tuning point of the preset frame (41), correspondingly, and an output terminal of the tuning circuit (60) is grounded;
the tuning circuit (60) is configured not to ground the preset frame (41) during the transmission phase of satellite communication; and
the tuning circuit (60) is configured to ground the preset frame (41) during the reception phase of satellite communication or during non-satellite communication.

4. The electronic apparatus (1) according to claim 3, wherein:
the tuning circuit (60) has two input terminals, and the tuning circuit (60) comprises an antenna switch (61), a first matching network (62) and a second matching network (63);
a first end of the first matching network (62) is electrically coupled to a first tuning point (P1) of the preset frame (41), and a second end of the first matching network (62) is electrically coupled to a first end of the antenna switch (61);
a first end of the second matching network (63) is electrically coupled to a second tuning point (P2) of the preset frame (41), and a second end of the second matching network (63) is electrically coupled to a second end of the antenna switch (61);
a third end of the antenna switch (61) is grounded; and
a control end of the antenna switch (61) is electrically coupled to a processor of the electronic apparatus (1).

5. The electronic apparatus (1) according to claim 3 or 4, wherein:
the tuning circuit (60) has two input terminals, and the tuning circuit (60) comprises an antenna switch (61), a first matching network (62) and a third matching network (64);
a first end of the first matching network (62) is electrically coupled to a first tuning point (P1) of the preset frame (41), and a second end of the first matching network (62) is electrically coupled to a first end of the antenna switch (61);
a first end of the third matching network (64) is electrically coupled to a first feeding point of the preset frame (41), and a second end of the third matching network (64) is electrically coupled to a second end of the antenna switch (61);
a third end of the antenna switch (61) is grounded;
a control end of the antenna switch (61) is electrically coupled to a processor of the electronic apparatus (1); and
the preset frame (41), the first matching network (62) and the third matching network (64) constitute an inverted-F antenna.

6. The electronic apparatus (1) according to claim 5, wherein the third matching network (64) comprises at least one of a zero-ohm resistor, an LC circuit or a capacitor.

7. The electronic apparatus (1) according to any one of claims 4-6, wherein the first matching network (62) comprises at least one of a zero-ohm resistor, an LC circuit or a capacitor; and the second matching network (63) comprises at least one of a zero-ohm resistor, an LC circuit or a capacitor.

8. The electronic apparatus (1) according to any one of claims 1-7, wherein the first antenna (10) is arranged at a first vertex of the electronic apparatus (1), and the second antenna (20) is arranged at a second vertex of the electronic apparatus (1).

9. The electronic apparatus (1) according to claim 8, wherein the first vertex is at a first top corner of the electronic apparatus (1), the second vertex is at a second top corner of the electronic apparatus (1), and the first top corner and the second top corner are symmetrical about a vertical central axis (V1) of the electronic apparatus (1).

10. The electronic apparatus (1) according to claim 9, wherein a circular polarization gain pattern of the first antenna (10) points towards a first direction and contains a component biased towards a direction opposite to a second direction; and a circular polarization gain pattern of the second antenna (20) points towards the first direction and contains a component biased towards the second direction.

11. The electronic apparatus (1) according to any one of claims 1-10, wherein:
the first antenna (10) comprises a first top frame (11), a first side frame (12), a first feeding point (13) and a first ground point (14);
the first top frame (11) extends along a second direction, the first side frame (12) extends along a third direction, and the first top frame (11) is electrically coupled to the first side frame (12);
the third direction is parallel to a vertical central axis (V1) of the electronic apparatus (1) and is perpendicular to a first direction and the second direction; and
the first top frame (11) is electrically coupled to a main board (30) of the electronic apparatus (1) through the first feeding point (13), and the first side frame (12) is grounded through the first ground point (14).

12. The electronic apparatus (1) according to claim 11, wherein the first antenna (10) further comprises a third feeding point (15), and the first top frame (11) is electrically coupled to the main board (30) of the electronic apparatus (1) through the third feeding point.

13. The electronic apparatus (1) according to any one of claims 1-10, wherein:
the second antenna (20) comprises a second top frame (21), a second side frame (22), a second feeding point (23) and a second ground point (24);
the second top frame (21) extends along a second direction, the second side frame (22) extends along a third direction, and the second top frame (21) is electrically coupled to the second side frame (22);
the third direction is parallel to a vertical central axis (V1) of the electronic apparatus (1) and is perpendicular to a first direction and the second direction; and
the second top frame (21) is electrically coupled to a main board (30) of the electronic apparatus (1) through the second feeding point (23), and the second side frame (22) is grounded through the second ground point (24).

14. The electronic apparatus (1) according to claim 13, wherein the second antenna (20) further comprises a fourth feeding point (25), and the second top frame (21) is electrically coupled to the main board of the electronic apparatus (1) through the fourth feeding point.

15. The electronic apparatus (1) according to any one of claims 1-14, wherein a horizontal central axis (H1) of the electronic apparatus (1) is parallel to a second direction, and the second direction is perpendicular to a first direction.

## Patentansprüche

1. Elektronische Vorrichtung (1), umfassend:
eine erste Antenne (10);
eine zweite Antenne (20); und
eine Isolationsvorrichtung (40),
wobei:
jede der ersten Antenne (10) und der zweiten Antenne (20) ein Satelliten-L-Band umfasst;
die Isolationsvorrichtung (40) zwischen der ersten Antenne (10) und der zweiten Antenne (20) angeordnet ist;
**dadurch gekennzeichnet, dass**
die Isolationsvorrichtung (40) sich während einer Sendphase der Satellitenkommunikation in einem ersten Zustand und während einer Empfangsphase der Satellitenkommunikation oder während einer Nicht-Satellitenkommunikation in einem zweiten Zustand befindet.

2. Elektronische Vorrichtung (1) nach Anspruch 1, wobei die Isolationsvorrichtung (40) einen vorgegebenen Rahmen (41) umfasst, der zwischen der ersten Antenne (10) und der zweiten Antenne (20) angeordnet ist, und wobei ein Trennstreifen (51, 52) zwischen dem vorgegebenen Rahmen (41) und der ersten Antenne (10) sowie zwischen dem vorgegebenen Rahmen (41) und der zweiten Antenne (20) angeordnet ist.

3. Elektronische Vorrichtung (1) nach Anspruch 2, wobei die Isolationsvorrichtung (40) ferner eine Abstimmschaltung (60) umfasst,
wobei mindestens ein Eingangsanschluss der Abstimmschaltung (60) elektrisch mit mindestens einem Abstimmpunkt des vorgegebenen Rahmens (41) verbunden ist und ein Ausgangsanschluss der Abstimmschaltung (60) geerdet ist;
die Abstimmschaltung (60) dazu konfiguriert ist, den vorgegebenen Rahmen (41) während der Sendphase der Satellitenkommunikation nicht zu erden; und
die Abstimmschaltung (60) dazu konfiguriert ist, den vorgegebenen Rahmen (41) während der Empfangsphase der Satellitenkommunikation oder während der Nicht-Satellitenkommunikation zu erden.

4. Elektronische Vorrichtung (1) nach Anspruch 3, wobei:
die Abstimmschaltung (60) zwei Eingangsanschlüsse aufweist und die Abstimmschaltung (60) einen Antennenschalter (61), ein erstes Anpassungsnetzwerk (62) und ein zweites Anpassungsnetzwerk (63) umfasst;
ein erster Anschluss des ersten Anpassungsnetzwerks (62) elektrisch mit einem ersten Abstimmpunkt (P1) des vorgegebenen Rahmens (41) verbunden ist und ein zweiter Anschluss des ersten Anpassungsnetzwerks (62) elektrisch mit einem ersten Anschluss des Antennenschalters (61) verbunden ist;
ein erster Anschluss des zweiten Anpassungsnetzwerks (63) elektrisch mit einem zweiten Abstimmpunkt (P2) des vorgegebenen Rahmens (41) verbunden ist und ein zweiter Anschluss des zweiten Anpassungsnetzwerks (63) elektrisch mit einem zweiten Anschluss des Antennenschalters (61) verbunden ist;
ein dritter Anschluss des Antennenschalters (61) geerdet ist; und
ein Steueranschluss des Antennenschalters (61) elektrisch mit einem Prozessor der elektronischen Vorrichtung (1) verbunden ist.

5. Elektronische Vorrichtung (1) nach Anspruch 3 oder 4, wobei:
die Abstimmschaltung (60) zwei Eingangsanschlüsse aufweist und einen Antennenschalter (61), ein erstes Anpassungsnetzwerk (62) und ein drittes Anpassungsnetzwerk (64) umfasst;
ein erster Anschluss des ersten Anpassungsnetzwerks (62) elektrisch mit einem ersten Abstimmpunkt (P1) des vorgegebenen Rahmens (41) verbunden ist und ein zweiter Anschluss des ersten Anpassungsnetzwerks (62) elektrisch mit einem ersten Anschluss des Antennenschalters (61) verbunden ist;
ein erster Anschluss des dritten Anpassungsnetzwerks (64) elektrisch mit einem ersten Einspeisepunkt des vorgegebenen Rahmens (41) verbunden ist und ein zweiter Anschluss des dritten Anpassungsnetzwerks (64) elektrisch mit einem zweiten Anschluss des Antennenschalters (61) verbunden ist;
ein dritter Anschluss des Antennenschalters (61) geerdet ist;
ein Steueranschluss des Antennenschalters (61) elektrisch mit einem Prozessor der elektronischen Vorrichtung (1) verbunden ist; und
der vorgegebene Rahmen (41), das erste Anpassungsnetzwerk (62) und das dritte Anpassungsnetzwerk (64) eine invertierte F-Antenne bilden.

6. Elektronische Vorrichtung (1) nach Anspruch 5, wobei das dritte Anpassungsnetzwerk (64) mindestens eines aus einem Null-Ohm-Widerstand, einer LC-Schaltung oder einem Kondensator umfasst.

7. Elektronische Vorrichtung (1) nach einem der Ansprüche 4 bis 6, wobei das erste Anpassungsnetzwerk (62) mindestens eines aus einem Null-Ohm-Widerstand, einer LC-Schaltung oder einem Kondensator umfasst; und das zweite Anpassungsnetzwerk (63) mindestens eines aus einem Null-Ohm-Widerstand, einer LC-Schaltung oder einem Kondensator umfasst.

8. Elektronische Vorrichtung (1) nach einem der Ansprüche 1 bis 7, wobei die erste Antenne (10) an einem ersten Eckpunkt der elektronischen Vorrichtung (1) und die zweite Antenne (20) an einem zweiten Eckpunkt der elektronischen Vorrichtung (1) angeordnet ist.

9. Elektronische Vorrichtung (1) nach Anspruch 8, wobei der erste Eckpunkt an einer ersten oberen Ecke der elektronischen Vorrichtung (1) und der zweite Eckpunkt an einer zweiten oberen Ecke der elektronischen Vorrichtung (1) liegt, und wobei die erste obere Ecke und die zweite obere Ecke symmetrisch bezüglich einer vertikalen Mittelachse (V1) der elektronischen Vorrichtung (1) angeordnet sind.

10. Elektronische Vorrichtung (1) nach Anspruch 9, wobei ein zirkular polarisiertes Gewinnmuster der ersten Antenne (10) in eine erste Richtung weist und eine Komponente enthält, die in eine der zweiten Richtung entgegengesetzte Richtung geneigt ist; und ein zirkular polarisiertes Gewinnmuster der zweiten Antenne (20) in die erste Richtung weist und eine Komponente enthält, die in die zweite Richtung geneigt ist.

11. Elektronische Vorrichtung (1) nach einem der Ansprüche 1 bis 10, wobei:
die erste Antenne (10) einen ersten oberen Rahmen (11), einen ersten seitlichen Rahmen (12), einen ersten Einspeisepunkt (13) und einen ersten Erdungspunkt (14) umfasst;
der erste obere Rahmen (11) sich entlang einer zweiten Richtung erstreckt, der erste seitliche Rahmen (12) sich entlang einer dritten Richtung erstreckt und der erste obere Rahmen (11) elektrisch mit dem ersten seitlichen Rahmen (12) verbunden ist;
die dritte Richtung parallel zu einer vertikalen Mittelachse (V1) der elektronischen Vorrichtung (1) und senkrecht zu einer ersten Richtung und der zweiten Richtung verläuft; und
der erste obere Rahmen (11) über den ersten Einspeisepunkt (13) elektrisch mit einer Hauptplatine (30) der elektronischen Vorrichtung (1) verbunden ist und der erste seitliche Rahmen (12) über den ersten Erdungspunkt (14) geerdet ist.

12. Elektronische Vorrichtung (1) nach Anspruch 11, wobei die erste Antenne (10) ferner einen dritten Einspeisepunkt (15) umfasst und der erste obere Rahmen (11) über den dritten Einspeisepunkt elektrisch mit der Hauptplatine (30) der elektronischen Vorrichtung (1) verbunden ist.

13. Elektronische Vorrichtung (1) nach einem der Ansprüche 1 bis 10, wobei:
die zweite Antenne (20) einen zweiten oberen Rahmen (21), einen zweiten seitlichen Rahmen (22), einen zweiten Einspeisepunkt (23) und einen zweiten Erdungspunkt (24) umfasst;
der zweite obere Rahmen (21) sich entlang einer zweiten Richtung erstreckt, der zweite seitliche Rahmen (22) sich entlang einer dritten Richtung erstreckt und der zweite obere Rahmen (21) elektrisch mit dem zweiten seitlichen Rahmen (22) verbunden ist;
die dritte Richtung parallel zu einer vertikalen Mittelachse (V1) der elektronischen Vorrichtung (1) und senkrecht zu einer ersten Richtung und der zweiten Richtung verläuft; und
der zweite obere Rahmen (21) über den zweiten Einspeisepunkt (23) elektrisch mit einer Hauptplatine (30) der elektronischen Vorrichtung (1) verbunden ist und der zweite seitliche Rahmen (22) über den zweiten Erdungspunkt (24) geerdet ist.

14. Elektronische Vorrichtung (1) nach Anspruch 13, wobei die zweite Antenne (20) ferner einen vierten Einspeisepunkt (25) umfasst und der zweite obere Rahmen (21) über den vierten Einspeisepunkt elektrisch mit der Hauptplatine der elektronischen Vorrichtung (1) verbunden ist.

15. Elektronische Vorrichtung (1) nach einem der Ansprüche 1 bis 14, wobei eine horizontale Mittelachse (H1) der elektronischen Vorrichtung (1) parallel zu einer zweiten Richtung verläuft und die zweite Richtung senkrecht zu einer ersten Richtung ist.

## Revendications

1. Dispositif électronique (1), comprenant :
une première antenne (10) ;
une deuxième antenne (20) ; et
un dispositif d'isolation (40),
dans lequel :
chacune de la première antenne (10) et de la deuxième antenne (20) comprend une bande L satellitaire ;
le dispositif d'isolation (40) est disposé entre la première antenne (10) et la deuxième antenne (20) ;
**caractérisé en ce que**
le dispositif d'isolation (40) se trouve dans un premier état pendant une phase d'émission de la communication par satellite et dans un deuxième état pendant une phase de réception de la communication par satellite ou pendant une communication non satellitaire.

2. Dispositif électronique (1) selon la revendication 1, dans lequel le dispositif d'isolation (40) comprend un cadre prédéfini (41) disposé entre la première antenne (10) et la deuxième antenne (20), et une bande de séparation (51, 52) est disposée entre le cadre prédéfini (41) et la première antenne (10) ainsi qu'entre le cadre prédéfini (41) et la deuxième antenne (20).

3. Dispositif électronique (1) selon la revendication 2, dans lequel le dispositif d'isolation (40) comprend en outre un circuit d'accord (60),
au moins une borne d'entrée du circuit d'accord (60) est couplée électriquement à au moins un point d'accord du cadre prédéfini (41), et une borne de sortie du circuit d'accord (60) est mise à la terre ;
le circuit d'accord (60) est configuré pour ne pas mettre à la terre le cadre prédéfini (41) pendant la phase d'émission de la communication par satellite ; et
le circuit d'accord (60) est configuré pour mettre à la terre le cadre prédéfini (41) pendant la phase de réception de la communication par satellite ou pendant une communication non satellitaire.

4. Dispositif électronique (1) selon la revendication 3, dans lequel :
le circuit d'accord (60) comporte deux bornes d'entrée et comprend un commutateur d'antenne (61), un premier réseau d'adaptation (62) et un deuxième réseau d'adaptation (63) ;
une première extrémité du premier réseau d'adaptation (62) est couplée électriquement à un premier point d'accord (P1) du cadre prédéfini (41), et une deuxième extrémité du premier réseau d'adaptation (62) est couplée électriquement à une première extrémité du commutateur d'antenne (61) ;
une première extrémité du deuxième réseau d'adaptation (63) est couplée électriquement à un deuxième point d'accord (P2) du cadre prédéfini (41), et une deuxième extrémité du deuxième réseau d'adaptation (63) est couplée électriquement à une deuxième extrémité du commutateur d'antenne (61) ;
une troisième extrémité du commutateur d'antenne (61) est mise à la terre ; et
une borne de commande du commutateur d'antenne (61) est couplée électriquement à un processeur du dispositif électronique (1).

5. Dispositif électronique (1) selon la revendication 3 ou 4, dans lequel :
le circuit d'accord (60) comporte deux bornes d'entrée et comprend un commutateur d'antenne (61), un premier réseau d'adaptation (62) et un troisième réseau d'adaptation (64) ;
une première extrémité du premier réseau d'adaptation (62) est couplée électriquement à un premier point d'accord (P1) du cadre prédéfini (41), et une deuxième extrémité du premier réseau d'adaptation (62) est couplée électriquement à une première extrémité du commutateur d'antenne (61) ;
une première extrémité du troisième réseau d'adaptation (64) est couplée électriquement à un premier point d'alimentation du cadre prédéfini (41), et une deuxième extrémité du troisième réseau d'adaptation (64) est couplée électriquement à une deuxième extrémité du commutateur d'antenne (61) ;
une troisième extrémité du commutateur d'antenne (61) est mise à la terre ;
une borne de commande du commutateur d'antenne (61) est couplée électriquement à un processeur du dispositif électronique (1) ; et
le cadre prédéfini (41), le premier réseau d'adaptation (62) et le troisième réseau d'adaptation (64) constituent une antenne en F inversé.

6. Dispositif électronique (1) selon la revendication 5, dans lequel le troisième réseau d'adaptation (64) comprend au moins l'un parmi une résistance de zéro ohm, un circuit LC ou un condensateur.

7. Dispositif électronique (1) selon l'une quelconque des revendications 4 à 6, dans lequel le premier réseau d'adaptation (62) comprend au moins l'un parmi une résistance de zéro ohm, un circuit LC ou un condensateur ; et le deuxième réseau d'adaptation (63) comprend au moins l'un parmi une résistance de zéro ohm, un circuit LC ou un condensateur.

8. Dispositif électronique (1) selon l'une quelconque des revendications 1 à 7, dans lequel la première antenne (10) est disposée à un premier sommet du dispositif électronique (1), et la deuxième antenne (20) est disposée à un deuxième sommet du dispositif électronique (1).

9. Dispositif électronique (1) selon la revendication 8, dans lequel le premier sommet est situé à un premier coin supérieur du dispositif électronique (1), le deuxième sommet est situé à un deuxième coin supérieur du dispositif électronique (1), et le premier coin supérieur et le deuxième coin supérieur sont symétriques par rapport à un axe central vertical (V1) du dispositif électronique (1).

10. Dispositif électronique (1) selon la revendication 9, dans lequel un diagramme de gain à polarisation circulaire de la première antenne (10) est orienté dans une première direction et contient une composante inclinée dans une direction opposée à une deuxième direction ; et un diagramme de gain à polarisation circulaire de la deuxième antenne (20) est orienté dans la première direction et contient une composante inclinée dans la deuxième direction.

11. Dispositif électronique (1) selon l'une quelconque des revendications 1 à 10, dans lequel :
la première antenne (10) comprend un premier cadre supérieur (11), un premier cadre latéral (12), un premier point d'alimentation (13) et un premier point de masse (14) ;
le premier cadre supérieur (11) s'étend selon une deuxième direction, le premier cadre latéral (12) s'étend selon une troisième direction, et le premier cadre supérieur (11) est couplé électriquement au premier cadre latéral (12) ;
la troisième direction est parallèle à un axe central vertical (V1) du dispositif électronique (1) et perpendiculaire à une première direction et à la deuxième direction ; et
le premier cadre supérieur (11) est couplé électriquement à une carte principale (30) du dispositif électronique (1) par l'intermédiaire du premier point d'alimentation (13), et le premier cadre latéral (12) est mis à la terre par l'intermédiaire du premier point de masse (14).

12. Dispositif électronique (1) selon la revendication 11, dans lequel la première antenne (10) comprend en outre un troisième point d'alimentation (15), et le premier cadre supérieur (11) est couplé électriquement à la carte principale (30) du dispositif électronique (1) par l'intermédiaire du troisième point d'alimentation.

13. Dispositif électronique (1) selon l'une quelconque des revendications 1 à 10, dans lequel :
la deuxième antenne (20) comprend un deuxième cadre supérieur (21), un deuxième cadre latéral (22), un deuxième point d'alimentation (23) et un deuxième point de masse (24) ;
le deuxième cadre supérieur (21) s'étend selon une deuxième direction, le deuxième cadre latéral (22) s'étend selon une troisième direction, et le deuxième cadre supérieur (21) est couplé électriquement au deuxième cadre latéral (22) ;
la troisième direction est parallèle à un axe central vertical (V1) du dispositif électronique (1) et perpendiculaire à une première direction et à la deuxième direction ; et
le deuxième cadre supérieur (21) est couplé électriquement à une carte principale (30) du dispositif électronique (1) par l'intermédiaire du deuxième point d'alimentation (23), et le deuxième cadre latéral (22) est mis à la terre par l'intermédiaire du deuxième point de masse (24).

14. Dispositif électronique (1) selon la revendication 13, dans lequel la deuxième antenne (20) comprend en outre un quatrième point d'alimentation (25), et le deuxième cadre supérieur (21) est couplé électriquement à la carte principale du dispositif électronique (1) par l'intermédiaire du quatrième point d'alimentation.

15. Dispositif électronique (1) selon l'une quelconque des revendications 1 à 14, dans lequel un axe central horizontal (H1) du dispositif électronique (1) est parallèle à une deuxième direction, et la deuxième direction est perpendiculaire à une première direction.
